# EUROPÄISCHE PATENTSCHRIFT

(11) **EP 1 240 254 B1**
(45) Veröffentlichungstag und Bekanntmachung des Hinweises auf die Patenterteilung: **18.02.2004**
(21) Anmeldenummer: 00987257.3
(22) Anmeldetag: 16.11.2000
(51) Int. Cl.: C09B 67/20, C09D 5/18, C08K 3/32

(54) **SICHERHEITSTECHNISCH VERBESSERTE PIGMENTZUBEREITUNGEN**
PIGMENT PREPARATIONS THAT ARE IMPROVED WITH REGARD TO SAFETY REGULATIONS
PREPARATIONS DE PIGMENTS A SECURITE AMELIOREE

(30) Priorität: 09.12.1999 DE 19959288
(43) Veröffentlichungstag der Anmeldung: 18.09.2002
(73) Patentinhaber: Clariant GmbH, 65929 Frankfurt am Main (DE)
(72) Erfinder: JUNG, Rüdiger, 65779 Kelkheim (DE); SAITMACHER, Klaus, 65830 Kriftel (DE); ACS, Arpad, 61440 Oberursel (DE)
(74) Vertreter: Hütter, Klaus, Dr.
(86) Internationale Anmeldenummer: PCT/EP2000/011346
(87) Internationale Veröffentlichungsnummer: WO 2001/042378

(56) Entgegenhaltungen:
- EP-A- 0 075 182
- EP-A- 0 178 554
- EP-A- 0 180 790
- EP-A- 0 537 475
- DD-A- 250 322
- US-A- 4 655 845
- US-A- 4 702 861
- US-A- 5 043 151

## Beschreibung

Die vorliegende Erfindung betrifft schwer entflammbare, warmlagerstabile und nicht deflagrierende Pulverpigmentzubereitungen.

Zahlreiche handelsübliche Pulverpigmente zeigen eine Abbrandgeschwindigkeit unter 45 Sekunden für 100 mm, was nach derzeit gültigen gesetzlichen Richtlinien eine Einstufung als Gefahrgut notwendig macht. Der Umgang mit und die Lagerhaltung von solchen Stoffen unterliegen daher besonderen Sicherheitsvorschriften, die meist sehr aufwendige apparate- und bautechnische Vorkehrungen erforderlich machen.

Aus der DD 250 322 A1 sind Plastformmassen mit flammhemmenden Pigmenten bekannt, wobei das Pigment ein kristallines Nitridophosphat ist und selbst flammhemmende Eigenschaften besitzen soll. Ammoniumpolyphosphat (APP) wird zum Zwecke des Flammschutzes von Kunststoffen eingesetzt (DE-A1-30 05 252, EP-A-0 049 763), beeinflußt jedoch die Materialeigenschaften des umgebenden Mediums signifikant. Auch die Dokumente EP-A-75,182; US-A-5,043,151; US-A-4,702,861 und US-A-4,655,845 beschreiben unterschiedliche Materialien, denen Phosporverbindungen hinzugefügt wurden.

Eine Methode, organische Pulverpigmente ohne Beeinträchtigung der Materialeigenschaften sicherheitstechnisch zu verbessern, ist bislang noch nicht bekannt.

Der vorliegenden Erfindung lag daher die Aufgabe zugrunde, flammgeschützte oder schwer entflammbare organische Pulverpigmente zur Verfügung zu stellen, ohne dass nennenswerte Beeinträchtigungen der pigmentären Eigenschaften, der Coloristik, der Rheologie oder des Dispergierverhaltens auftreten.

Es zeigte sich, dass diese Aufgabe überraschenderweise durch eine Pigmentpräparation, die im wesentlichen aus dem organischen Pigment und einem Ammoniumpolyphosphat oder einer Organophosphorverbindung besteht, gelöst werden kann.

Gegenstand der vorliegenden Erfindung ist eine Pigmentzubereitung, enthaltend ein organisches Pigment und 0,2 bis 20 Gew.-%, vorzugsweise 1 bis 15 Gew.-%, insbesondere 2 bis 10 Gew.-%, bezogen auf das Gesamtgewicht der Pigmentzubereitung, eines Ammoniumpolyphosphats (APP) oder einer Organophosphorverbindung.

Als APP im Sinne der vorliegenden Erfindung kommen solche der allgemeinen Formel

H₍ₙ₋ₘ₎₊₂ (NH₄)ₘPₙO₃ₙ₊₁

in Betracht,
in welcher n eine ganze Zahl mit einem Durchschnittswert von 20 bis 800 bedeutet und das Verhältnis von m zu n zwischen 0,7 und 1,1 liegt (DE-A-12 83 532); weiterhin mikroverkapseltes APP, das vorzugsweise zu 75 bis 99 Gew.-% aus APP der vorstehenden Formel und vorzugsweise 1 bis 25 Gew.-% eines Kunstharzes, welches die einzelnen APP-Teilchen umhüllt, besteht, wobei das Kunstharz aus Melamin und Formaldehyd (EP-A-0 033 361); oder aus Phenol und Formaldehyd (DE-A-30 05 252); oder aus Melamin und/oder Dicyandiamid (EP-A-0 106 248); aus Polyharnstoff (EP-A-0 180 790), aus Polyurethan (EP-A-0 178 554) oder aus Polycarbodiimid (EP-A-0 178 529) bestehen kann.

APP selbst kann nach bekannten Verfahren, wie z.B. in US-A-3 978 195, EP-A-0 480 180, EP-A-0 537 475, EP-A-0 411 381 oder EP-A-0 088 265 beschrieben, hergestellt werden.

Die vorstehend beschriebenen APP sind auch unter der Bezeichnung ®Exolit (Clariant GmbH) im Handel, z.B. Exolit AP 422, Exolit AP 423, Exolit AP 452, Exolit AP 462.
Organophosphorverbindungen im Sinne der vorliegenden Erfindung sind beispielsweise Tris(2-chlorethyl)phosphat, Tris(2-isopropyl)phosphat, Methanphosphonsäure(5-ethyl-2-methyl-1,2,3-dioxaphosphorinan-5-yl)methylmethylester, Phosphorsäure-ethylenglykol-polyester mit Hydroxyalkylester- und Alkylestergruppen oder mit Hydroxyalkylester- und Chloralkylestergruppen, z.B. Exolit OP 514, Exolit OP 550, Exolit OP 910.

Als organische Pigmente kommen z.B. Azopigmente, wie Monoazo-, Disazo-, Naphtol-, Azokondensations- oder Metallkomplexpigmente, wie auch polycyclische Pigmente, wie Isoindolinon- und Isoindolinpigmente, Anthanthron-, Thioindigo-, Chinophthalon-, Anthrachinon-, Dioxazin-, Phthalocyanin-, Chinacridon-, Perylen-, Perinon-, Diketopyrrolopyrrol-, Thiazoindigo- und Azomethinpigmente, in Betracht.

Von besonderem Interesse sind dabei diejenigen organischen Pigmente, deren Pulver leichtentzündlich ist, wie z.B. C.I. Pigment Red 38, P. Red 184, P. Yellow 12, P. Orange 5.

Die erfindungsgemäße Pigmentzubereitung kann noch weitere übliche Hilfsmittel und Additive enthalten, z.B. Dispergiermittel, Extender, Wachse, Füllstoffe, Stellmittel, Entschäumer, Antistaubmittel, Farbmittel zum Nuancieren, Tenside, Konservierungsmittel und Trocknungsverzögerungsmittel.

Von besonderem Interesse sind Pigmentzubereitungen, bestehend im wesentlichen aus 0,2 bis 20 Gew.-%, vorzugsweise 1 bis 15 Gew.-%, insbesondere 2 bis 10 Gew.-%, eines Ammoniumpolyphosphats oder einer Organophosphorverbindung; 99,8 bis 80 Gew.-%, vorzugsweise 99 bis 85 Gew.-%, insbesondere 98 bis 90 Gew.-%, eines organischen Pigments; und 0 bis 15 Gew.-%, beispielsweise 0,1 bis 10 Gew.-%, der vorstehend genannten Hilfsmittel und Additive; bezogen auf das Gesamtgewicht (100 %) der Pigmentzubereitung.
Die erfindungsgemäße Pigmentzubereitung kann hergestellt werden, indem man das organische Pigment in Form des Pulverpigments, eines wasserfeuchten Filter- oder Preßkuchens oder einer Pigmentsuspension mit dem APP oder der Organophosphorverbindung in Pulverform oder in Form einer Lösung oder Suspension in Wasser, in den vorstehend genannten Mengenverhältnissen, vermischt, z.B. mit Hilfe eines Pulvermischers oder Pastenmischers.

Die erfindungsgemäßen Pigmentzubereitungen können als Granulat, Mikrogranulat oder Pulver vorliegen.

Durch den erfindungsgemäßen Zusatz von APP ändert sich das Abbrandverhalten leichtentzündlicher Pigmentpulver dahingehend, dass die Flamme kurz nach dem Anzünden von selbst erlischt. Eine Einstufung als Gefahrgut entfällt somit.
Durch den erfindungsgemäßen Zusatz von APP ändert sich die Staubexplosionsfähigkeit dahingehend, daß die Druckanstiegsgeschwindigkeit (K_{ST}-Wert) stark herabgesetzt wird und die Mindestzündenergien von praxisrelevanten Staub-Luft-Gemischen um 1 bis 2 Größenordnungen höher liegen.

Die erfindungsgemäß hergestellten Pigmentzubereitungen lassen sich zum Pigmentieren von hochmolekularen organischen Materialien natürlicher oder synthetischer Herkunft einsetzen, z.B. von Kunststoffen, Harzen, Lacken, Anstrichfarben oder elektrophotographischen Tonern und Entwicklern, sowie von Tinten und Druckfarben.

Hochmolekulare organische Materialien, die mit den genannten Pigmentzubereitungen pigmentiert werden können, sind beispielsweise Celluloseether und -ester, wie Ethylcellulose, Nitrocellulose, Celluloseacetat oder Cellulosebutyrat, natürliche Harze oder Kunstharze, wie Polymerisationsharze oder Kondensationsharze, z.B. Aminoplaste, insbesondere Harnstoff- und Melaminformaldehydharze, Alkydharze, Acrylharze, Phenoplaste, Polycarbonate, Polyolefine, wie Polystyrol, Polyvinylchlorid, Polyethylen, Polypropylen, Polyacrylnitril, Polyacrylsäureester, Polyamide, Polyurethane oder Polyester, Gummi, Casein, Silikon und Silikonharze, einzeln oder in Mischungen.
Dabei spielt es keine Rolle, ob die erwähnten hochmolekularen organischen Verbindungen als plastische Massen, Schmelzen oder in Form von Spinnlösungen, Lacken, Anstrichstoffen oder Druckfarben vorliegen. Je nach Verwendungszweck erweist es sich als vorteilhaft, die erfindungsgemäßen Pigmentzubereitungen als Blend oder in Form von Präparationen oder Dispersionen zu benutzen. Bezogen auf das zu pigmentierende, hochmolekulare organische Material setzt man die erfindungsgemäßen Pigmentzubereitungen in einer Menge von vorzugsweise 0,05 bis 30 Gew.-%, vorzugsweise 0,1 bis 10 Gew.-% ein.

Die erfindungsgemäßen Pigmentzubereitungen sind auch geeignet als Farbmittel in elektrophotographischen Tonern und Entwicklern, wie z.B. Ein- oder Zweikomponentenpulvertonern (auch Ein- oder Zweikomponenten-Entwickler genannt), Magnettoner, Flüssigtoner, Polymerisationstoner sowie Spezialtoner (L.B. Schein, "Electrophotography and Development Physics"; Springer Series in Electrophysics 14, Springer Verlag, 2nd edition, 1992).

Typische Tonerbindemittel sind Polymerisations-, Polyadditions- und Polykondensationsharze, wie Styrol-, Styrolacrylat-, Styrolbutadien-, Acrylat-, Polyester-, Phenol-Epoxidharze, Polysulfone, Polyurethane, einzeln oder in Kombination, sowie Polyethylen und Polypropylen, die noch weitere Inhaltsstoffe, wie Ladungssteuermittel, Wachse oder Fließhilfsmittel, enthalten können oder im Nachhinein mit diesen Zusätzen modifiziert werden.

Desweiteren sind die erfindungsgemäßen Pigmentzubereitungen geeignet als Farbmittel in Pulver und Pulverlacken, insbesondere in triboelektrisch oder elektrokinetisch versprühbaren Pulverlacken, die zur Oberflächenbeschichtung von Gegenständen aus beispielsweise Metall, Holz, Kunststoff, Glas, Keramik, Beton, Textilmaterial, Papier oder Kautschuk zur Anwendung kommen (J.F. Hughes, "Electrostatics Powder Coating" Research Studies, John Wiley & Sons, 1984).

Als Pulverlackharze werden typischerweise Epoxidharze, carboxyl- und hydroxylgruppenhaltige Polyesterharze, Polyurethan- und Acrylharze zusammen mit üblichen Härtern eingesetzt. Auch Kombinationen von Harzen finden Verwendung. So werden beispielsweise häufig Epoxidharze in Kombination mit carboxyl- und hydroxylgruppenhaltigen Polyesterharzen eingesetzt. Typische Härterkomponenten (in Abhängigkeit vom Harzsystem) sind beispielsweise Säureanhydride, Imidazole sowie Dicyandiamid und deren Abkömmlinge, verkappte Isocyanate, Bisacylurethane, Phenol- und Melaminharze, Triglycidylisocyanurate, Oxazoline und Dicarbonsäuren.

Außerdem sind die erfindungsgemäßen Pigmentzubereitungen als Farbmittel in Ink-Jet Tinten auf wäßriger und nichtwässriger Basis sowie in solchen Tinten, die nach dem hot-melt-Verfahren arbeiten, geeignet.

Weiterhin sind die erfindungsgemäßen Pigmentzubereitungen auch als Farbmittel für Farbfilter sowohl für die additive wie subtraktive Farberzeugung geeignet.

In den nachfolgenden Beispielen bedeuten "Teile" Gewichtsteile, Prozente sind Gewichtsprozente.

### Beispiel 1

100 Teile pulverförmiges C.I. Pigment Red 38 werden mit 2 Teilen, 5 Teilen oder 10 Teilen Exolit AP 423 in einem Pulvermischer intensiv vermischt, so dass eine homogene Verteilung gewährleistet ist.

### Beispiel 2

280 Teile wässriger Pigmentpreßkuchen (28 % Feststoffanteil) von C.I. Pigment Red 38 werden mit 2 Teilen, 5 Teilen oder 10 Teilen Exolit AP 423 in einem Pastenmischer intensiv vermengt und anschließend getrocknet.

### Beispiel 3

Zur Herstellung von 100 Teilen C.I. Pigment Red 38 wird nach beendeter Kuppelreaktion die Kuppelsuspension abgekühlt und mit 2 Teilen, 5 Teilen oder 10 Teilen Exolit AP 462 versetzt. Durch die geringe Löslichkeit dieser Exolit-Präparation (mikroverkapseltes Ammoniumpolyphosphat) kann die Pigmentaufarbeitung durch Filtration und anschließender Trocknung erfolgen.

### Beispiel 4

100 Teile pulverförmiges C.I. Pigment Red 38 werden in einem liegenden Mischer mit 2 Teilen, 5 Teilen oder 10 Teilen Exolit OP 910 gleichmäßig besprüht und anschließend getrocknet. Bei Exolit OP 910 handelt es sich um eine viskose Flüssigkeit, die zwecks besserer Handhabbarkeit mit Wasser verdünnt werden kann.

### Abbrandversuche

Der Test gemäß "Transportvorschrift nach UN-Richtlinie" sieht die Messung der Abbrandgeschwindigkeit über eine 100 mm Strecke vor, wobei der Stoff in einer vorgegebenen Dreiecksform auf einer Keramikplatte aufgehäuft wird. Es wurden 6 Einzelmessungen durchgeführt, wobei die höchste Abbrandgeschwindigkeit bewertet wurde. Die gemessenen Werte sind als Mittelwert über die Meßstrecke von 100 mm in der nachstehenden Tabelle zusammengestellt.

| Probe | Abbrandzeit 100 mm in Sekunden |
|---|---|
| Vergleich (ohne APP): | |
| P.R. 38 (Korngröße - 4,3 µm (d₅₀) | 28 |
| P.R. 38 (Korngröße- 11,1 µm (d₅₀) | 43 |
| Erfindungsgemäß (mit APP): | |
| Beispiel 1, 10 % AP 423 | Flamme erlischt über die Meßstrecke |
| Beispiel 1, 5 % AP 423 | Flamme erlischt über die Meßstrecke |
| Beispiel 1, 2 % AP 423 | 54 |
| Beispiel 2, 10 % AP 423 | Flamme erlischt über die Meßstrecke |
| Beispiel 2, 5 % AP 423 | Flamme erlischt über die Meßstrecke |
| Beispiel 2, 2 % AP 423 | 57 |
| Beispiel 3, 10 % AP 462 | Flamme erlischt über die Meßstrecke |
| Beispiel 3, 5 % AP 462 | Flamme erlischt über die Meßstrecke |
| Beispiel 3, 2 % AP 462 | 58 |
| Beispiel 4, 10 % OP 910 | Flamme erlischt über die Meßstrecke |
| Beispiel 4, 5 % OP 910 | Flamme erlischt über die Meßstrecke |
| Beispiel 4, 2 % OP 910 | Flamme erlischt über die Meßstrecke |

Keine der geprüften Gemische ist noch als "leicht entzündlicher Feststoff" einzustufen. Selbst in der niedrigsten Konzentration wurde noch eine flammhemmende Wirkung beobachtet.

Im Gegensatz zu unbehandelten Pigmentpulvern hat die Korngrößenverteilung bei den erfindungsgemäßen Pigmentzubereitungen keinen Einfluß auf das Abbrandverhalten.

### Beispiele 5 bis 8:

Für folgende Pigmente werden in gleicher Weise wie in Beispielen 1 bis 4 Pigmentzubereitungen hergestellt:
5) C.I. Pigment Red 184,
6) C.I. Pigment Orange 5,
7) C.I. Pigment Yellow 74,
8) C.I. Pigment Yellow 12

Warmlagerung im 1I Drahtkorb nach UN-Richtlinie (Testmethode N.4):
Die Untersuchung von C.I. Pigment Yellow 12 bei der Warmlagerung im 1I Drahtkorb mit 0 %, 5 %, 10 % Anteil Exolit ASP 423 bei einer Ofentemperatur von 120°C führte zu einer Absenkung der Selbsterwärmung von 33°C (0 % ASP 423) auf 18°C (5 % ASP 423) bzw. 11°C (10 % ASP 423).

### Versuche zum Staubexplosionsverhalten

Die Staubexplosionskenndaten wurden in einer geschlossenen 20 I- Kugel mit chemischem Zünder (Zündenergie 10.000 mJ) und einer Pralldüse als Staubverteilungssystem ermittelt.
Die Mindestzündenergien wurden in einer MIKE III-Apparatur (modifiziertes Hartmann-Rohr) bestimmt (Staubverteilungssystem: Pilz; Triggerung: HV-Relais, bewegte Elektrode; Ladespannung: 11 bzw. 15 kV; Elektrodenabstand 6 mm).

### Beispiel 9:

Eine Pigmentzubereitung gemäß Beispiel 7 (C.I. Pigment Yellow 74 mit 10 % Anteil Exolit AP 423) wird auf ihr Staubexplosionsverhalten untersucht.
Es wird ein K_{ST}-Wert von 250 bar*m/s gefunden. Die Mindestzündenergien liegen bei 300 mJ (Staubkonzentration 1 mg/l). Ein C.I. Pigment Yellow 74 ohne Zusatz von Exolit AP 423 weist einen K_{ST}-Wert von 320 bar*m/s und eine Mindestzündenergie von 3 mJ, jeweils bei Staubkonzentrationen von 0,5 bis 1,5 mg/l auf.

## Patentansprüche

1. Pigmentzubereitung, enthaltend ein organisches Pigment und 0,2 bis 20 Gew.-%, bezogen auf das Gesamtgewicht der Pigmentzubereitung, eines Ammoniumpolyphosphats oder einer Organophosphorverbindung.

2. Pigmentzubereitung nach Anspruch 1, enthaltend 1 bis 15 Gew.-%, vorzugsweise 2 bis 10 Gew.-%, bezogen auf das Gesamtgewicht der Pigmentzubereitung, eines Ammoniumpolyphosphats oder einer Organophosphorverbindung.

3. Pigmentzubereitung nach Anspruch 1 oder 2, **dadurch gekennzeichnet, dass** das Ammoniumpolyphosphat die Formel
H₍ₙ₋ₘ₎₊₂ (NH₄)ₘPₙO₃ₙ₊₁
hat, worin n eine ganze Zahl mit einem Durchschnittswert von 20 bis 800 ist und das Verhältnis von m zu n zwischen 0,7 und 1,1 liegt.

4. Pigmentzubereitung nach Anspruch 3, **dadurch gekennzeichnet, dass** das Ammoniumpolyphosphat durch ein Kunstharz aus der Gruppe MelaminFormaldehyd, Phenol-Formaldehyd, Melamin und/oder Dicyandiamid, Polyharnstoff, Polyurethan und Polycarbodiimid mikroverkapselt ist.

5. Pigmentzubereitung nach einem oder mehreren der Ansprüche 1 bis 4, **dadurch gekennzeichnet, dass** die Organophosphorverbindung ein Tris(2-chlorethyl)phosphat, Tris(2-isopropyl)phosphat, Methanphosphonsäure(5-ethyl-2-methyl-1,2,3-dioxaphosphorinan-5-yl)methyl-methylester, Phosphorsäure-ethylenglykol-polyester mit Hydroxyalkylester- und Alkylestergruppen oder mit Hydroxyalkylester- und Chloralkylestergruppen ist.

6. Pigmentzubereitung nach einem oder mehreren der Ansprüche 1 bis 5, **dadurch gekennzeichnet, dass** das organische Pigment ein Azopigment oder ein polycyclisches Pigment ist.

7. Pigmentzubereitung nach Anspruch 6, **dadurch gekennzeichnet, dass** das Azopigment ein Monoazo-, Disazo-, Naphtol-, Metallkomplex- oder Azokondensationspigment ist.

8. Pigmentzubereitung nach Anspruch 6, **dadurch gekennzeichnet, dass** das polycyclische Pigment ein Isoindolinon-, Isoindolin-, Anthanthron-, Thioindigo-, Chinophthalon-, Anthrachinon-, Dioxazin-, Phthalocyanin-, Chinacridon-, Perylen-, Perinon-, Diketopyrrolopyrrol-, Thiazoindigo- oder Azomethinpigment ist.

9. Pigmentzubereitung nach einem oder mehreren der Ansprüche 1 bis 8, bestehend im wesentlichen aus 0,2 bis 20 Gew.-% eines Ammoniumpolyphosphats oder einer Organophosphorverbindung und 99,8 bis 80 Gew.-% eines organischen Pigments, und 0 bis 15 Gew.-% an Hilfsmitteln und Additiven, bezogen auf das Gesamtgewicht (100 %) der Pigmentzubereitung.

10. Verfahren zur Herstellung einer Pigmentzubereitung nach einem oder mehreren der Ansprüche 1 bis 9, **dadurch gekennzeichnet, dass** man das organische Pigment in Form des Pulverpigments, eines wasserfeuchten Filteroder Preßkuchens oder einer Pigmentsuspension mit dem Ammoniumpolyphosphat oder der Organophosphorverbindung in Pulverform oder in Form einer Lösung oder Suspension in Wasser vermischt.

11. Verwendung einer Pigmentzubereitung nach einem oder mehreren der Ansprüche 1 bis 9 zum Pigmentieren eines hochmolekularen organischen Materials natürlicher oder synthetischer Herkunft.

12. Verwendung nach Anspruch 11, **dadurch gekennzeichnet, dass** das hochmolekulare organische Material ein Kunststoff, Harz, Lack, eine Anstrichfarbe, ein elektrophotographischer Toner oder Entwickler, eine Tinte oder ein Pulverlack ist.

## Claims

1. A pigment preparation comprising an organic pigment and 0.2 to 20% by weight, based on the total weight of the pigment preparation, of an ammonium polyphosphate or of an organophosphorus compound.

2. A pigment preparation as claimed in claim 1, including 1 to 15% by weight, preferably 2 to 10% by weight, based on the total weight of the pigment preparation, of an ammonium polyphosphate or of an organophosphorus compound.

3. A pigment preparation as claimed in claim 1 or 2, wherein the ammonium polyphosphate has the formula
H₍ₙ₋ₘ₎₊₂ (NH₄)ₘPₙO₃ₙ₊₁
where n is an integer having an average value of 20 to 800 and the ratio of m to n is between 0.7 and 1.1.

4. A pigment preparation as claimed in claim 3, wherein the ammonium polyphosphate is microencapsulated by a synthetic resin selected from the group consisting of melamine-formaldehyde, phenol-formaldehyde, melamine and/or dicyandiamide, polyurea, polyurethane and polycarbodiimide.

5. A pigment preparation as claimed in one or more of claims 1 to 4, wherein the organophosphorus compound is a tris(2-chloroethyl) phosphate, tris(2-isopropyl) phosphate, (5-ethyl-2-methyl-1,3,2-dioxaphosphorinan-5-yl)methyl methyl methanephosphonate, phosphoric acid ethylene glycol polyester with hydroxyalkyl ester and alkyl ester groups or with hydroxyalkyl ester and chloroalkyl ester groups.

6. A pigment preparation as claimed in one or more of claims 1 to 5, wherein the organic pigment is an azo pigment or a polycyclic pigment.

7. A pigment preparation as claimed in claim 6, wherein the azo pigment is a monoazo, disazo, naphtol, metal complex or azo condensation pigment.

8. A pigment preparation as claimed in claim 6, wherein the polycyclic pigment is an isoindolinone, isoindoline, anthanthrone, thioindigo, quinophthalone, anthraquinone, dioxazine, phthalocyanine, quinacridone, perylene, perinone, diketopyrrolopyrrole, thiazoindigo or azomethine pigment.

9. A pigment preparation as claimed in one or more of claims 1 to 8, consisting essentially of 0.2 to 20% by weight of an ammonium polyphosphate or of an organophosphorus compound and 99.8 to 80% by weight of an organic pigment, and 0 to 15% by weight of assistants and additives, based on the total weight (100%) of the pigment preparation.

10. A process for preparing a pigment preparation as claimed in one or more of claims 1 to 9, which comprises mixing the organic pigment in the form of the pulverulent pigment or of a water-moist filter or press cake or of a pigment suspension with the APP or the organophosphorus compound in powder form or in the form of a solution or suspension in water.

11. The use of a pigment preparation as claimed in one or more of claims 1 to 9 for pigmenting macromolecular organic material of natural or synthetic origin.

12. A use as claimed in claim 11, wherein the macromolecular organic material is a plastic, resin, varnish, paint, electrophotographic toner or developer, an ink or a powder coating.

## Revendications

1. Préparation pigmentaire, contenant un pigment organique et 0,2 à 20% en poids, par rapport au poids total de la préparation pigmentaire, d'un polyphosphate d'ammonium ou d'un composé organophosphoré.

2. Préparation pigmentaire selon la revendication 1, contenant 1 à 15 % en poids, de préférence 2 à 10 % en poids, par rapport au poids total de la préparation pigmentaire, d'un polyphosphate d'ammonium ou d'un composé organophosphoré.

3. Préparation pigmentaire selon la revendication 1 ou 2, **caractérisée en ce que** le polyphosphate d'ammonium a la formule
H₍ₙ₋ₘ₎₊₂(NH₄)ₘPₙO₃ₙ₊₁
dans laquelle n est un nombre entier avec une valeur moyenne de 20 à 800 et le rapport de m à n se trouve entre 0,7 et 1,1.

4. Préparation pigmentaire selon la revendication 3, **caractérisée en ce que** le polyphosphate d'ammonium est microencapsulé au moyen d'une résine synthétique dans le groupe mélamine-formaldéhyde, phénol-formaldéhyde, mélamine et/ou dicyandiamide, polyurée, polyuréthane et polycarbodiimide.

5. Préparation pigmentaire selon une ou plusieurs des revendications 1 à 4, **caractérisée en ce que** le composé organophosphoré est un tris(2-chloroéthyl)phosphate, tris(2-isopropyl)phosphate, un ester méthylique de (acide méthanephosphonique)-(5-éthyl-2-méthyl-1,2,3-dioxaphosphorinan-5-yl)méthyle, acide phosphorique-éthylèneglycol-polyester avec des groupes ester d'hydroxyalkyle et ester d'alkyle ou avec des groupes ester d'hydroxyalkyle et ester de chloroalkyle.

6. Préparation pigmentaire selon une ou plusieurs des revendications 1 à 5, **caractérisée en ce que** le pigment organique est un pigment azoïque ou un pigment polycyclique.

7. Préparation pigmentaire selon la revendication 6, **caractérisée en ce que** le pigment azoïque est un pigment monoazoïque, disazoïque, de naphtol, de complexe métallique ou de condensation azoïque.

8. Préparation pigmentaire selon la revendication 6, **caractérisée en ce que** le pigment polycyclique est un pigment iso-indolinone, iso-indoline, anthanthrone, thioindigo, quinophtalone, anthraquinone, dioxazine, phtalocyanine, quinacridone, pérylène, périnone, dicétopyrrolopyrrole, thiazoindigo ou azométhine.

9. Préparation pigmentaire selon une ou plusieurs des revendications 1 à 8, constituée essentiellement de 0,2 à 20 % en poids d'un polyphosphate d'ammonium ou d'un composé organophosphoré et de 99,8 à 80 % en poids d'un pigment organique, et de 0 à 15 % en poids d'adjuvants et d'additifs, par rapport au poids total (100 %) de la préparation pigmentaire.

10. Procédé pour la fabrication d'une préparation pigmentaire selon une ou plusieurs des revendications 1 à 9, **caractérisé en ce qu'**on mélange le pigment organique sous la forme du pigment en poudre, d'un gâteau de filtre ou de filtre presse ou d'une suspension de pigment avec le polyphosphate d'ammonium ou le composé organophosphoré sous la forme de poudre ou sous la forme d'une solution ou d'une suspension dans l'eau.

11. Utilisation d'une préparation pigmentaire selon une ou plusieurs des revendications 1 à 9 pour la pigmentation d'un matériau organique de molécularité élevée d'origine naturelle ou synthétique.

12. Utilisation selon la revendication 11, **caractérisée en ce que** le matériau organique de molécularité élevée est une substance synthétique, une résine, un vernis, une peinture, un toner électrophotographique ou un révélateur, une encre ou une peinture pulvérulente.
